# EUROPÄISCHE PATENTSCHRIFT

(11) **EP 3 909 653 B1**
(45) Veröffentlichungstag und Bekanntmachung des Hinweises auf die Patenterteilung: **10.05.2023**
(21) Anmeldenummer: 21173807.5
(22) Anmeldetag: 14.05.2021
(51) Int. Cl.: A62C 3/16, A62C 35/10

(54) **VORRICHTUNG ZUR SICHEREN LAGERUNG BRENNBARER STOFFE**
DEVICE FOR THE SAFE STORAGE OF COMBUSTIBLE SUBSTANCES
DISPOSITIF DE STOCKAGE SÉCURISÉ DES MATIÈRES INFLAMMABLES

(30) Priorität: 15.05.2020 AT 504342020
(43) Veröffentlichungstag der Anmeldung: 17.11.2021
(73) Patentinhaber: Mattro GmbH, 6130 Schwaz (AT)
(72) Erfinder: Lerch, Harald, 6020 Innsbruck (AT); Kirchner-Höfer, Werner, 6114 Kolsass (AT)
(74) Vertreter: Grosse Schumacher Knauer von Hirschhausen

(56) Entgegenhaltungen:
- DE-U1-202020 000 691
- US-B2- 9 415 248

## Beschreibung

Die vorliegende Erfindung betrifft eine Vorrichtung zur sicheren Lagerung von brennbaren Stoffen, insbesondere Lithium-Ionen-Akkumulatoren.

### HINTERGRUND DER ERFINDUNG UND STAND DER TECHNIK

Die sehr schnell wachsende Elektromobilität setzt die Verwendung von Lithium-Ionen-Akkumulatoren voraus, deren Lagerung und Transport eine große Herausforderung darstellt. Die sichere Lagerung von Lithium-Ionen-Akkumulatoren stellt aktuell ein großes Problem dar, da ein Brand solcher Akkumulatoren schwerwiegende Folgen auslösen kann. Daher ist es besonders wichtig, schon im Vorhinein rechtzeitig Vorkehrungen zu treffen, um einen solchen Brand zu vermeiden.

Für das Löschen eines sich schnell ausbreitenden und schwer löschbaren Feuers sind große Mengen Wasser nötig und das Löschwasser wird stets mit Problemstoffen stark kontaminiert. Bei Feuerwehreinsätzen kommt es zudem zur Freisetzung von wassergefährdenden und krebserregenden Stoffen sowie Pyrolyseprodukten. Außerdem werden Schwermetalle, ätzende Säuren wie Flusssäure oder giftige Stoffe wie Phosphine freigesetzt. Für Logistikdienstleister, welche Lithium-Ionen-Akkumulatoren transportieren und lagern, kann nach der Brandlöschung der Betrieb lange lahmgelegt werden, da die Aufräumarbeiten und die Dekontamination langwierig sind.

Daher ist es wichtig, die Lithium-Ionen-Akkumulatoren beim Transport und auch bei der Lagerung in speziellen Behältern zu lagern, welche einen Brand verhindern und trotzdem eine einfache Handhabung ermöglichen. Ein Sicherheitsbehälter zur Lagerung von brennbaren Stoffen, welche im Falle eines Brandes sicherheitskritische Zustände auslösen, wird beispielsweise in WO 2016/016008 offenbart. Dabei handelt es sich um einen Innenbehälter, in welchem Lithium-Ionen-Akkumulatoren gelagert werden können und welcher von einem Außenbehälter geschützt wird. Im Innenbehälter können an vorgesehenen Plätzen Aufnahmebehälter angeordnet werden, welche die Akkumulatoren beinhalten. Das heißt die Akkumulatoren in den Aufnahmebehältern können bei einem Transport zuerst in den Sicherheitsbehälter geschlichtet werden und dann mit diesem transportiert werden.

Eine weitere Möglichkeit für den Transport von elektrochemischen Vorrichtungen wird in WO 2013/020704 A2 offenbart. Der dort gezeigte Sicherheitsbehälter weist ein Sicherheitsbehälterunterteil, in welchem das Gefahrengut gelagert wird, und ein Sicherheitsbehälteroberteil auf. Das Oberteil dient dabei hauptsächlich der Reinigung mittels Filter der bei einem Brand austretenden Gase. Ein weiterer Sicherheitsbehälter ist bekannt aus DE 20 2020 000691 U1.

Die im Stand der Technik bekannten Sicherheitsbehälter verhindern daher im Falle eines Brandes einerseits eine Ausbreitung des Feuers an die Umgebung und andererseits eine Beeinträchtigung der Umwelt durch die Abluft.

### KURZE BESCHREIBUNG DER ERFINDUNG

Aufgabe der vorliegenden Erfindung ist es daher eine Vorrichtung bereitzustellen, welche einerseits das sichere Lagern von brennbaren Stoffen erlaubt, bei welchen ein Brand ansonsten schwer löschbare Feuer mit weitreichenden Nachwirkungen auslöst und andererseits einen einfachen Transport der brennbaren Stoffe mit schnell anbringbaren zusätzlichen Löschvorrichtungen ermöglicht.

Gelöst wird diese Aufgabe durch eine Vorrichtung zur sicheren Lagerung von brennbaren Stoffen, umfassend einen unteren Behälter, welcher feuerfest ist und eine Öffnung an der Oberseite aufweist, einen oberen Behälter, welcher vorzugsweise festes, rieselfähiges Löschmittel umfasst, und eine Öffnung an der Unterseite aufweist und eine Auslöseeinrichtung mit einer Schmelzsicherung. Der obere Behälter ist oberhalb des unteren Behälters lösbar anbringbar und die Auslöseeinrichtung stellt eine lösbare Verbindung zwischen dem oberen Behälter und dem unteren Behälter im Bereich der jeweiligen Öffnung her.

Diese lösbare Verbindung verschließt die Öffnung an der Oberseite des unteren Behälters und die Öffnung an der Unterseite des oberen Behälters. Die Schmelzsicherung gibt nach Auslösung durch eine Auslösetemperatur die Öffnung an der Unterseite des oberen Behälters und die Öffnung an der Oberseite des unteren Behälters frei und stellt eine stoffleitende Verbindung her. Die Vorrichtung ermöglich im Unterschied zum Stand der Technik die einfache Anbringung eines zusätzlichen löschverstärkenden Mittels bei Transport der gelagerten brennbaren Stoffe, welches im Falle eines Brandes instantan ausgelöst wird.

Die Auslösetemperatur der Auslöseeinrichtung kann zwischen 70 und 150 °C, vorzugsweise zwischen 95 und 125 °C betragen.

Durch die lösbare Verbindung des oberen Behälters mit dem unteren Behälter können beide Behälter getrennt voneinander transportiert und gelagert werden. Somit können die Behälter beispielsweise einzeln auf ein Transportfahrzeug gehoben werden und auf dem Fahrzeug wieder zusammengesetzt werden. Dies erlaubt eine sehr einfache Handhabung, welche dennoch den größtmöglichen Schutz garantiert.

Im unteren feuerfesten Behälter können brennbare Stoffe wie Lithium-Ionen-Akkumulatoren von Elektrofahrzeugen gelagert oder transportiert werden.

Der obere Behälter, welcher mit einem Löschmittel befüllbar ist, bietet die notwendige Sicherheit zur Lagerung der Akkumulatoren im unteren Behälter. Bei dem Löschmittel handelt es sich vorzugsweise um festes, rieselfähiges Löschmittel wie beispielsweise Hohlglasgranulat. Mithilfe der Auslöseeinrichtung kann das Löschmittel im Falle einer Erhitzung bzw. eines Brandes des brennbaren Stoffs instantan in den unteren Behälter über die Öffnung zwischen unterem und oberen Behälter in den unteren Behälter gelangen. Diese automatische Löscheinrichtung ermöglich daher den größtmöglichen Schutz bei der Lagerung von brennbaren Stoffen wie Lithium-Ionen-Akkumulatoren, um einen Brand mit den weitreichenden Folgen zu vermeiden.

Über die Schmelzsicherung kann die Öffnung zwischen oberem und unteren Behälter temperaturabhängig geöffnet werden. Die genaue Ausgestaltung der Schmelzsicherung kann dabei an die erwünschte Auslösetemperatur angepasst werden, ab welcher das Löschmittel in den unteren Behälter eingeleitet werden soll. Die Auslöseeinrichtung kann daher an die Eigenschaften des zu lagernden brennbaren Stoffes angepasst werden.

Des Weiteren kann die Auslöseeinrichtung eine Membran umfassen, wobei die Membran die Öffnung zwischen oberen und unteren Behälter abdeckt, vorzugsweise an der Flanschöffnung des unteren Behälters. Bevorzugt löst sich die Membran ab einer Auslösetemperatur von 100 bis 120 °C auf. Solange der im unteren Behälter gelagerte brennbare Stoff keine Gefährdung darstellt und sich nicht erhitzt, bildet die Membran daher eine Sperre für das sich im oberen Behälter befindliche Löschmittel sowie der Schmelzsicherung. Ein Auflösen der Membran kann dem Löschmittel dann jedoch ein Vordringen in den unteren Behälter ermöglichen.

Die Membran kann beispielsweise aus Acrylnitril-Butadien-Kautschuk (NBR) oder Ethylen-Propylen-Dien-Kautschuk (EPDM) bestehen. Eine Membran aus NBR weist vorzugsweise eine Dicke von 0,5 bis 5 mm auf, eine Membran aus EPDM weist vorzugsweise eine Dicke von 0,5 bis 1 mm auf.

In einer bevorzugten Ausführungsvariante umfasst die Auslöseeinrichtung außerdem eine Schieberkonstruktion mit Schmelzlotsicherung. Die Schieberkonstruktion kann weiters einen Schieber mit zumindest einem Pneumatikzylinder umfassen, wobei der Schieber in vorgespannter Position die Öffnung zwischen oberen und unteren Behälter abdeckt, wobei die Schmelzlotsicherung den Schieber in vorgespannter Position hält. Die Schmelzlotsicherung hält abhängig vom Einsatzort bis zu einer Auslösetemperatur von 70 bis 147 °C, abhängig vom Schmelzpunkt der Schmelzlotsicherung. Bevorzugt entspricht der Schmelzpunkt einer Temperatur von 72, 98, 120 oder 147 °C. Die Auslösetemperatur kann dabei an den Einsatzort und die Beschaffenheit der zu lagernden Stoffe angepasst werden.

Die Schieberkonstruktion ist beispielsweise samt einem Schlauchstück am oberen Behälter fixiert, und wird im Bedarfsfall von dem unteren Behälter über eine Flanschverschraubung gelöst. Die Öffnung des unteren Behälters wird beispielsweise mittels eines Verschlussflansches mit Dichtung verschlossen. Der obere Behälter kann mitsamt Schieberkonstruktion verbracht werden und bei neuerlichem Einsatz wieder auf den unteren Behälter gestellt werden. Die Auslösemembrane wird anstelle des Verschlussflansches mit der Flanschverschraubung wieder verschraubt.

Nach Aufschmelzen der Schmelzlotsicherung kann wiederum das oberhalb des Schiebers eingelagerte Löschmittel in den unteren Behälter vordringen. Im Zusammenspiel mit der Membran kann die Schmelzlotsicherung als sekundäre Sicherung gegen unkontrollierte Auslösung fungieren. Der Schmelzpunkt der Schmelzlotsicherung kann dabei wieder an die Eigenschaften des eingelagerten brennbaren Stoffes angepasst werden. Der zumindest eine Pneumatikzylinder erlaubt eine mechanische Betätigung des Schiebers über das Schmelzen der Sicherung. Genauer gesagt, wird der Schieber über die Schmelzlotsicherung in vorgespannter Position gehalten und über die Pneumatikzylinder zurückgezogen, sobald die Sicherung schmilzt. Dadurch öffnet sich die Öffnung zwischen oberen und unteren Behälter. Dieses sekundäre Sicherungselement erlaubt somit ein Zurückhalten des Löschmittels bei unbeabsichtigter Beschädigung der Membran. Bevorzugt lässt sich der Schieber der Schieberkonstruktion auch mechanisch mittels Handauslösung betätigen. Im Falle einer Störung ist somit maximale Sicherheit gewährleistet.

Für den getrennten Transport von oberen und unteren Behälter kann im oberem Behälter eine Bohrung in der Schiebekonstruktion vorgesehen sein, sodass der Schieber gesichert werden kann und ein ungewollter Austritt des Löschmittels verhindert werden kann. Im unteren Behälter kann die Öffnung an der Oberseite, über welche das Löschmittel in den unteren Behälter gelangt, mechanisch mittels einer Kappe oder Abdeckung verschlossen werden.

In einer weiteren Ausführungsvariante ist der obere Behälter an der Unterseite als Trichterkonstruktion ausgebildet, wobei die Trichterkonstruktion ein Fallrohr umfasst. Das Fallrohr schließt über die Auslöseeinrichtung an die Öffnung an der Oberseite des unteren Behälters an. Die Trichterkonstruktion erlaubt das zielgenaue Einleiten des Löschmittels in den unteren Behälter und ein vollständiges Entleeren des Löschmittels aus dem oberen Behälter.

Am Fallrohr kann die Auslöseeinrichtung einfach realisiert werden. Bevorzugt ist der Durchmesser des Fallrohres im Wesentlichen an den Durchmesser der Öffnung an der Oberseite des unteren Behälters angepasst. Das Fallrohr kann mithilfe eines temperaturbeständigen bzw. hochtemperaturfesten Schlauches mit der Auslöseeinrichtung verbunden werden, wobei beide Enden des Schlauches mittels einer Schlauchschelle befestigbar sind. Die Auslöseeinrichtung ist wiederum mit der Öffnung an der Oberseite des unteren Behälters verbunden. In einer Ausführungsvariante ist die Auslöseeinrichtung mittels eines Flanschs mit dem unteren Behälter verbunden.

Die Verbindung von Auslöseeinrichtung mit unterem bzw. oberen Behälter ist daher eine lösbare Verbindung, welche sehr einfach verbunden bzw. gelöst werden kann. Im Falle eines getrennten Transports bzw. einer getrennten Lagerung von oberem und unterem Behälter kann die Auslöseeinrichtung beispielsweise mit dem oberen Behälter verbunden bleiben, um so einen Austritt des Löschmittels zu verhindern. Natürlich kann das Fallrohr des oberen Behälters auch mit einem Deckel oder ähnlichem verschlossen werden.

Außerdem kann der obere Behälter an der Oberseite eine Füllöffnung und einen Deckel umfassen, wobei mit dem Deckel die Füllöffnung verschließbar ist. Über diese Füllöffnung lässt sich das Löschmittel einfach in den oberen Behälter einfüllen und der Deckel schützt das Löschmittel vor äußeren Umwelteinflüssen. Daher kann der obere Behälter auch problemlos transportiert werden.

Weiters kann der Deckel einen Aktivkohlefilter und zumindest eine Austrittsöffnung aufweisen. Die Austrittsöffnung erlauben im Brandfall einen Gaswechsel. Mithilfe des Aktivkohlefilters wird das austretende Gas vorab gefiltert und dessen Toxizität stark vermindert. Die freigesetzten Materialien und Gase beim Versagen von Lithium-Ionen-Akkumulators sind zum Teil hoch toxisch und extrem gesundheitsschädlich. Der Aktivkohlefilter erlaubt eine besonders wirksame Herausfilterung der Reaktionsprodukte eines gefährdeten Lithium-Ionen-Akkumulators.

Bevorzugt ist der untere Behälter doppelwandig ausgeführt, um die Kerntemperatur während eines Brandes im Inneren von der Außenoberfläche zu entkoppeln und möglichst gering zu halten.

Zusätzlich kann der untere Behälter seitlich zumindest eine Öffnung aufweisen. Diese zumindest eine Öffnung oder auch Durchführung kann dem Anschluss von Wasser - und/oder Kohlendioxid-Löschanlagen von außerhalb des Behälters dienen. Außerdem können auch Fühler oder sonstige dem Stand der Technik entsprechende Überwachungselemente an diesen Öffnungen angebracht werden.

In einer weiteren Ausführungsvariante ist an der Oberseite des unteren Behälters zumindest ein Überdruckventil angebracht. Dieses Überdruckventil verhindert ein Bersten des Behälters bei plötzlich auftretendem Überdruck im Inneren des Behälters. Dadurch kann eine Explosion des unteren Behälters im Brandfall vermieden werden.

Des Weiteren kann der untere Behälter eine seitliche Öffnung und eine verriegelbare Türe umfassen, wobei mit der verriegelbaren Türe die seitliche Öffnung verschließbar ist. Mithilfe der Türe können die zu sichernden Stoffe leicht in den unteren Behälter eingebracht werden.

Das Material der Türe entspricht bevorzugt dem Material des unteren Behälters, um die größtmögliche Sicherheit der Umgebung zu garantieren. Im Falle eines Brandes bildet die seitliche Öffnung mit der verriegelbaren Türe somit keine Sicherheitsminimierung.

Bevorzugt weist der untere Behälter gegenüberliegende im Wesentlichen parallele Seitenwände auf, wobei im Inneren des Behälters an diesen Seitenwänden Paare von im Wesentlichen horizontal ausgerichteten Führungen jeweils auf gleicher Höhe angebracht sind, wobei an jedem dieser Paare ein Gitterrost fixierbar ist. Die Fixierung der eingelegten Gitterroste kann über Schrauben erfolgen. Durch diese Gitterroste lässt sich der Innenraum des unteren Behälters horizontal in verschiedene Ebenen unterteilen. Dadurch können mehrere Lagen von zu lagernden brennbaren Materialen in den unteren Behälter eingebracht und gelagert werden. Um ein Verrutschen der Materialen zu verhindern, können zusätzlich die Zwischenräume im Inneren des unteren Behälters mit Löschmittel aufgefüllt werden. Beispielsweise können Löschmittelsäcke gefüllt mit Hohlglasgranulat die die Zwischenräume eingebracht werden. Dies ergibt den zusätzlichen Vorteil einer noch größeren Brandhemmung im Falle einer Entzündung der gelagerten Stoffe. Außerdem können die Gitterroste derart ausgebildet sein, dass ein Verrutschen der auf den Gitterrosten gelagerten Stoffe stark vermindert wird. Dies kann beispielsweise durch Öffnungen in den Gitterrosten ermöglicht werden.

Eine weitere Ausführungsvariante der vorliegenden Erfindung sieht einen Wassersprinkler im unteren Behälter vor. Der Wassersprinkler kann mittels einer Glassicherung stufenweise ab einer Auslösetemperatur von 57°C bis 182°C ausgelöst werden. Bevorzugt wird eine Glassicherung gewählt, welche bei einer Temperatur von 57, 68, 79, 93, 141 oder 182 °C ausgelöst wird. Je nach Einsatzort bzw. Beschaffenheit der zu lagernden Stoffe können somit unterschiedliche Auslösetemperaturen gewählt werden. Dadurch kann redundant auch eine Löschung auf Wasserbasis erfolgen, sollte sich der gelagerte brennbare Stoff entzünden. Außerdem kann dem Löschwasser ein Zusatzstoff beigefügt werden, um die Oberflächenspannung des Wassers oder die Lösch - und Kühleigenschaften sowie den Umweltschutz zu erhöhen.

Als Redundanz kann zusätzlich über die zumindest eine Öffnung seitlich am unteren Behälter auch Wasser, Kohlendioxid und/oder ein Gasgenerator eingebracht werden.

Eine bevorzugte Ausführungsvariante sieht an der Unterseite des oberen und unteren Behälters Füße und an der Oberseite Stapelecken mit vorzugsweise einem Durchbruch vor. Sofern der obere Behälter mit dem unteren Behälter verbunden ist, steht somit die gesamte Vorrichtung auf den Füßen des unteren Behälters. Die Größe der Füße ist jeweils an die Größe der Stapelecken angepasst, sodass bei einem Übereinanderstapeln der Behälter eine stabile Verbindung realisiert wird. Anders gesagt, kann der obere Behälter einfach auf den unteren Behälter aufgesetzt werden, indem die Füße des oberen Behälters in die Stapelecken des unteren Behälters eingebracht werden.

Die Füße erlauben außerdem ein Versetzten des Behälters mit Flurfördermittel. Weiters können die Füße Bügel, welche zur Behältermitte hin angeordnet sind, aufweisen, um ein Verrutschen während des Versetzens mit einem Flurfördermittel zu vermindern und ein Herunterfallen zu vermeiden. Dieselben Bügel können auch an den Füßen des oberen Behälters angebracht sein, um dieselben Vorteile beim Versetzten des oberen Behälters zu ermöglichen. Die an der Oberseite der Behälter angebrachten Stapelecken erlauben ein Manipulieren und Transportieren der Behälter mithilfe eines Hebemittels. Dadurch können die Behälter auch leicht auf ein Transportfahrzeug gehoben werden.

### DETAILLIERTE BESCHREIBUNG DER ERFINDUNG

Um die Erfindung besser zu veranschaulichen, werden die wesentlichen Merkmale anhand von bevorzugten Ausführungsformen der erfindungsgemäßen Vorrichtung zur Lagerung von brennbaren Stoffen in folgenden Figuren dargestellt.

Es zeigen:
- Fig. 1a: eine Vorderansicht der erfindungsgemäßen Vorrichtung zur sicheren Lagerung von brennbaren Stoffen.
- Fig. 1b: einen Längsschnitt der erfindungsgemäßen Vorrichtung zur sicheren Lagerung von brennbaren Stoffen.
- Fig. 2: eine Draufsicht (links) und einen Querschnitt (rechts) der erfindungsgemäßen Vorrichtung zur sicheren Lagerung von brennbaren Stoffen.
- Fig. 3: eine Vorderansicht (links) und einen Längsschnitt (rechts) des oberen Behälters der erfindungsgemäßen Vorrichtung.
- Fig. 4: eine Draufsicht (links) und einen Längsschnitt (rechts) des unteren Behälters samt Auslöseeinrichtung der erfindungsgemäßen Vorrichtung.
- Fig. 5: eine Draufsicht (links) und eine Schnittdarstellung (rechts) des Auslöseeinrichtung samt Schieberkonstruktion.
- Fig. 6: die Auslöseeinrichtung samt Schieberkonstruktion der erfindungsgemäßen Vorrichtung in perspektivischer Darstellung.

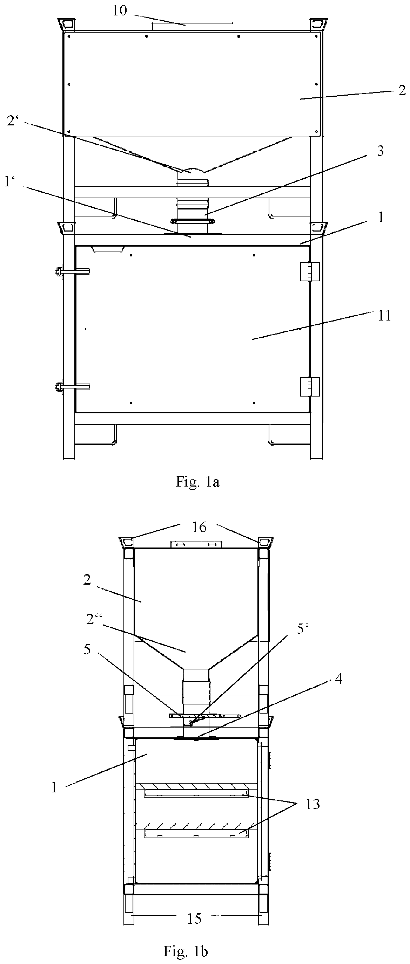

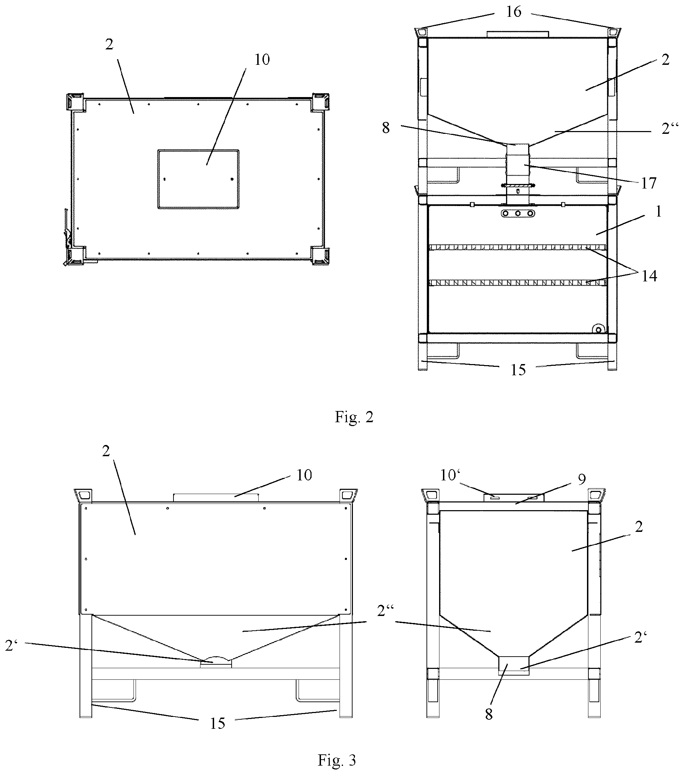

Wie in Fig. 1a ersichtlich umfasst die erfindungsgemäße Vorrichtung zur Lagerung brennbarer Stoffe als wesentliche Bestandteile einen unteren Behälter 1, einen oberen Behälter 2 und eine Auslöseeinrichtung 3. Der untere Behälter 1 dient der Lagerung der brennbaren Stoffe und ist daher feuerfest ausgeführt. Um eine Verbindung zwischen unterem und oberen Behälter 1, 2 zu ermöglichen, weist der untere Behälter 1 an der Oberseite eine Öffnung 1' auf und der obere Behälter 2 an der Unterseite eine Öffnung 2'. Der obere Behälter 2 befindet sich über dem unteren Behälter 1 und beinhaltet Löschmittel, mit welchem im Falle einer Erhitzung der im unteren Behälter 1 gelagerten brennbaren Stoffe ein Brand bzw. eine Explosion verhindert wird. Das Löschmittel kann über eine Füllöffnung 9 an der Oberseite des oberen Behälters in selbigen gefüllt werden. Nachdem das Löschmittel eingefüllt wurde, kann die Füllöffnung 9 mit einem Deckel 10 verschlossen werden (siehe auch Fig. 2 links). Damit das Löschmittel zum richtigen Zeitpunkt in den unteren Behälter 1 eingeleitet wird, umfasst die Vorrichtung eine Auslöseeinrichtung 3. Diese Auslöseeinrichtung 3 verbindet den unteren Behälter 1 lösbar mit dem oberen Behälter 2. Bevorzugt befindet sich die Auslöseeinrichtung 3 wie in Fig. 1a gezeigt im Bereich der Öffnung an der Oberseite des unteren Behälters 1' und der Öffnung an der Unterseite des oberen Behälters 2' und verschließt die beiden Öffnungen. Daher verhindert die Auslöseeinrichtung 3, dass das Löschmittel vom oberen Behälter 2 in den unteren Behälter 1 gelangen kann, solange eine bestimmte Maximaltemperatur im unteren Behälter 1 nicht überschritten ist.

Besonders bevorzugt umfasst die Auslöseeinrichtung 3 eine Schmelzsicherung. Ein Teil der Schmelzsicherung schmilzt ab einer gewissen Temperatur und löst damit den Löschprozess aus. Dabei gibt die Auslöseeinrichtung 3 eine Öffnung zwischen oberem und unterem Behälter 2, 1 frei. Indem vorzugsweise festes, rieselfähiges Löschmittel in den oberen Behälter 2 gefüllt wird, kann dieses dann mithilfe der Gravitation in den unteren Behälter 1 gelangen. Die verwendete Schmelzsicherung bzw. deren Eigenschaften können dabei an die Begebenheiten wie den Einsatzort oder den zu lagernden brennbaren Stoff angepasst werden. Genauer gesagt, kann im Wesentlichen die Auslösetemperatur der Schmelzsicherung angepasst werden. Bevorzugt schmilzt die Schmelzsicherung bei einer Temperatur von 70 bis 150 °C, besonders bevorzugt bei einer Temperatur von 95 bis 125 °C.

Wie in der Vorderansicht der erfindungsgemäßen Vorrichtung in Fig. 1a außerdem ersichtlich, kann die Vorderseite des unteren Behälters 1 mit einer Tür 11 verschlossen sein. Die Tür 11 erlaubt eine einfache Einbringung der zu lagernden brennbaren Stoffe in den unteren Behälter 1. Zur Sicherheit ist die Tür außerdem verriegelbar, um bei einem Transport der Vorrichtung einen festen Verschluss zu garantieren. Die Tür 11 kann wie der restliche untere Behälter 1 aus einem feuerfesten Material gefertigt sein bzw. aus dem gleichen Material wie der untere Behälter 1 bestehen.

In der in Fig. 1b gezeigten bevorzugten Ausführungsform umfasst die Auslöseeinrichtung 3 eine Membran 4 und eine Schieberkonstruktion 5 samt Schmelzlotsicherung 5'. Die Membran kann sich an der Öffnung an der Oberseite des unteren Behälters 1 befinden und diese abschließen. Wie in Fig. 1b dargestellt, kann sich die Schieberkonstruktion 5 als sekundäre Sicherung über der Membran 4 befinden. Bei einer unbeabsichtigten Beschädigung der Membran 4 verschließt die Schieberkonstruktion 5 somit weiterhin die Öffnung 1'.

Sowohl die Membran 4 als auch die Schmelzlotsicherung 5' schmelzen ab einer bestimmten Temperatur. Diese Schmelztemperatur hängt von der Beschaffenheit der Membran 4 bzw. der Schmelzlotsicherung 5' ab, welche an die Gegebenheiten des Einsatzortes angepasst wird. Bevorzugt schmilzt die Membran 4 bei einer Temperatur von 100 bis 120 °C. Auch die Schmelzlotsicherung 5' kann unterschiedliche Auslösetemperaturen aufweisen. Die Auslösetemperatur kann beispielsweise 72, 98, 120 oder 147 °C sein.

Wie in Fig. 1b und Fig. 2 (rechte Seite) außerdem gezeigt umfassen der obere und der untere Behälter 2, 1 besonders bevorzugt an der Unterseite bzw. an der Oberseite jeweils Füße 15 bzw. Stapelecken 16. Dabei passen die Füße 15 genau in die Stapelecken 16, wodurch der obere Behälter 2 in einfacher Weise auf den unteren Behälter 1 aufgesetzt werden kann und ein Verrutschen verhindert wird.

Die Füße 15 erlauben außerdem einen Transport bzw. ein Versetzen der Behälter mit einem Flurfördermittel. Um ein Verrutschen bzw. Herunterfallen während des Versetzens mit einem Flurfördermittel zu verhindern, können die Füße 15 auch Bügel aufweisen, welche zur Behältermitte hin angeordnet sein können, wie in den Figuren 1a, 2 (rechts) und 3 (links) zu sehen.

Die Stapelecken 16 weisen bevorzugt Durchbrüche auf (siehe Fig. 1 - 4), um den Transport mittels Hebemittel zu ermöglichen.

Fig. 3 zeigt eine bevorzugte Ausführungsform des oberen Behälters 2 der erfindungsgemäßen Vorrichtung. Dabei ist die Unterseite des oberen Behälters 2 als Trichterkonstruktion 2" ausgebildet. Die Trichterkonstruktion 2" endet in einem Fallrohr 8, an welches die Auslöseeinrichtung 3 anschließen kann. Sofern der obere Behälter 2 über dem unteren Behälter 1 gestapelt ist, mündet das Fallrohr 8 daher über die Auslöseeinrichtung 3 in die Öffnung an der Oberseite des unteren Behälters 2'. Die Trichterkonstruktion 2" ermöglicht das vollständige Ausschütten des Löschmittels, ohne Rückstände im oberen Behälter 2 zurückzulassen. Über das Fallrohr 8 kann der obere Behälter 2 gezielt mit dem unteren Behälter 1 stoffleitend verbunden werden.

In der rechten Abbildung der Fig. 3 ist erkennbar, dass der Deckel 10, mit welchem die Füllöffnung 9 des oberen Behälters 2 verschließbar ist, Austrittsöffnungen 10' aufweisen kann. Diese erlauben im Falles eines Brands des im unteren Behälter 1 gelagerten Stoffes einen Gaswechsel. Die Gase würden in diesem Fall in den oberen Behälter 2 aufsteigen, da die Auslöseeinrichtung 3 die Öffnung zwischen oberem und unterem Behälter 2, 1 im Brandfall freigibt. Daher ist es wichtig, den oberen Behälter 2 nicht komplett luftdicht auszuführen, um einen Gaswechsel zu ermöglichen. Außerdem kann der Deckel 10 zur zusätzlichen Sicherheit im Brandfall einen Aktivkohlefilter umfassen, welcher einen Austritt von Schadstoffen in die Umgebung verhindert.

Wie in Fig. 1a und 1b schematisch dargestellt, kann das Fallrohr 8 über einen temperaturbeständigen bzw. hochtemperaturfesten Schlauch 17 mit der Auslöseeinrichtung 3 verbunden werden. Dabei können beide Enden des Schlauches 17 jeweils mit einer Schlauchschelle befestigt werden. Dies erlaubt eine einfache, lösbare Verbindung des oberen Behälters 2 mit der Auslöseeinrichtung 3.

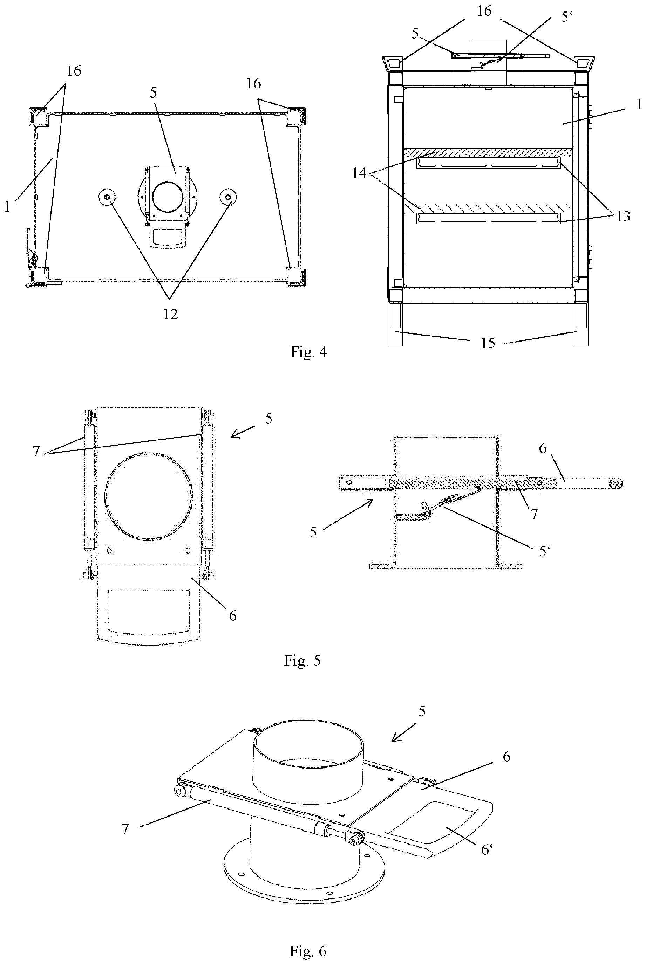

Fig. 4 zeigt auf der linken Seite die Oberseite des unteren Behälters 1 mit befestigter Auslöseeinrichtung 3. In dieser Ausführungsvariante umfasst die Auslöseeinrichtung eine Schieberkonstruktion 5. Die Auslöseeinrichtung kann dabei mithilfe eines Flanschs mit der Oberseite des unteren Behälters 1 genau über der Öffnung 1' lösbar verbunden werden. Die Oberseite des unteren Behälters 1 kann außerdem zumindest ein Überdruckventil 12 aufweisen. Überdruckventile 12 verhindern eine Explosion des unteren Behälters 1 im Falle eines plötzlich auftretenden Überdrucks.

In der rechten Abbildung der Fig. 4 sind die seitlichen Führungen 13 und an den Führungen 13 fixierte Gitterroste 14 dargestellt. Ein Paar von Führungen 13 ist jeweils an der Innenseite der Seitenwände des unteren Behälters auf gleicher Höhe angebracht. In der Ausführungsform in Fig. 4 befinden sich zwei Paare von Führungen 13 an welchen zwei Gitterroste 14 fixiert werden können im Inneren des unteren Behälters. Daher können auf drei verschiedenen Ebenen brennbare Stoffe in den unteren Behälter 1 eingebracht werden. Die Gitterroste 14 können derart ausgebildet sein, dass ein Verrutschen der zu lagernden Stoffe verhindert wird. Dies wird beispielsweise durch Öffnungen im Gitterrost 14 ermöglicht. Die Fixierung der Gitterroste 14 an den Führungen 13 kann über Schrauben erfolgen.

Die Hohlräume im unteren Behälter 1 können dabei mit Löschmittel aufgefüllt werden, um einerseits ein Verrutschen der lagernden Stoffe noch mehr zu verhindern und andererseits die Sicherheit zu erhöhen. Das Löschmittel kann beispielsweise mittels Löschmittelsäcke, welche bevorzugt Hohlglasgranulat umfassen, in den unteren Behälter 1 eingebracht werden.

In den Figuren 5 und 6 ist eine Ausführungsform der Schieberkonstruktion 5 der erfindungsgemäßen Auslöseeinrichtung 3 dargestellt. In dieser Ausführungsform umfasst die Schieberkonstruktion 5 zwei Pneumatikzylinder 7 und einen Schieber 6. Dabei ist die Schieberkonstruktion 5 an einem Fallrohr angebracht, welches an das Fallrohr 8 des oberen Behälters 2 anschließt. An der gegenüberliegenden Seite des Fallrohres kann ein Flansch zur Verbindung mit dem unteren Behälter 1 vorgesehen sein. Die Schmelzlotsicherung 5' hält den Schieber in vorgespannter Position über der Öffnung an der Oberseite des unteren Behälters 1', an welchem die Auslöseeinrichtung angebracht ist. Somit bildet der Schieber 6, bevorzugt zusätzlich zur Membran 4, eine Barriere zwischen den Öffnungen im oberen und unteren Behälter 2', 1', indem er das Fallrohr der Auslöseeinrichtung 3 verschließt.

Die Schieberkonstruktion 5 (Fig. 6) samt Schlauchstück ist am oberen Behälter (Fig. 2) fixiert, und wird im Bedarfsfall von dem unteren Behälter über eine Flanschverschraubung gelöst. Die Öffnung an der Oberseite des unteren Behälters 1' wird mittels eines Verschlussflansches mit Dichtung verschlossen. Der obere Behälter 2 kann mitsamt Schieberkonstruktion 5 verbracht werden und bei neuerlichem Einsatz wieder auf den unteren Behälter 1 gestellt werden. Die Auslösemembrane 4 wird anstelle des Verschlussflansches mit der Flanschverschraubung wieder verschraubt.

Die Schmelzlotsicherung 5' kann dabei im Wesentlichen als Verbindungsglied zwischen zwei Haken ausgebildet sein, sie in der rechten Abbildung in Fig. 5 gezeigt. Ein Haken ist an der Innenseite des Fallrohres der Auslöseeinrichtung 3 angebracht und ein Haken ist an der Unterseide des Schiebers 6 fixiert. Nach Aufschmelzen der Schmelzlotsicherung 5' fehlt somit die Verbindung zwischen den Haken und die aus ihrer Vorspannung gelösten Pneumatikzylinder 7 bewirken ein Verschieben des Schiebers 6.

Um den Schieber 6 auch mechanisch mittels Krafteinwirkung auszulösen und somit die Öffnung im Fallrohr freizugeben kann der Schieber 6 wie in Fig. 6 gezeigt einen Griff 6' umfassen. Durch Ziehen an dem Griff 6' bricht die Schmelzlotsicherung 5' und der Schieber 6 wird aus seiner vorgespannten Position befreit.

Ähnlich wie die Membran 4 schmilzt auch die Schmelzlotsicherung 5' ab einer gewissen Auslösetemperatur. Diese kann je nach Begebenheiten unterschiedlich gewählt werden, indem man die Schmelzlotsicherung 5' in Material und Dicke anpasst.

## Patentansprüche

1. Vorrichtung zur sicheren Lagerung von brennbaren Stoffen, insbesondere Lithium-Ionen-Akkumulatoren, umfassend
• einen unteren Behälter (1), welcher feuerfest ist und eine Öffnung an der Oberseite (1') aufweist,
• einen oberen Behälter (2), welcher vorzugsweise festes, rieselfähiges Löschmittel umfasst, und eine Öffnung an der Unterseite (2') aufweist,
• und eine Auslöseeinrichtung (3) mit einer Schmelzsicherung,
wobei der obere Behälter (2) oberhalb des unteren Behälters (1) lösbar anbringbar ist,
**dadurch gekennzeichnet, dass**
die Auslöseeinrichtung (3) eine lösbare Verbindung zwischen dem oberen Behälter (2) und dem unteren Behälter (1) im Bereich der jeweiligen Öffnung (1', 2') herstellt,
wobei die lösbare Verbindung die Öffnung an der Oberseite des unteren Behälters (1') und die Öffnung an der Unterseite des oberen Behälters (2') verschließt und
wobei die Schmelzsicherung (3) nach Auslösung durch eine Auslösetemperatur die Öffnung an der Unterseite des oberen Behälters (2') und die Öffnung an der Oberseite des unteren Behälters (1') freigibt und eine stoffleitende Verbindung herstellt.

2. Vorrichtung nach Anspruch 1, **dadurch gekennzeichnet, dass** die Schmelzsicherung der Auslöseeinrichtung (3) bei einer Auslösetemperatur von 70 bis 150 °C, vorzugsweise von 95 und 125 °C schmilzt.

3. Vorrichtung nach einem der Ansprüche 1 oder 2, **dadurch gekennzeichnet, dass** die Auslöseeinrichtung eine Membran (4) umfasst, wobei die Membran (4) die Öffnung zwischen oberen und unteren Behälter (2, 1) abdeckt, wobei die Membran vorzugsweise ab einer Auslösetemperatur von 100 bis 120 °C schmilzt

4. Vorrichtung nach einem der Ansprüche 1 bis 3, **dadurch gekennzeichnet, dass** die Auslöseeinrichtung eine Schieberkonstruktion (5) mit Schmelzlotsicherung (5') umfasst, wobei die Schieberkonstruktion (5) einen Schieber (6) mit zumindest einem Pneumatikzylinder (7) umfasst, wobei der Schieber (6) in vorgespannter Position eine Barriere zwischen der Öffnung an der Oberseite des unteren Behälters (1') und der Öffnung an der Unterseite des oberen Behälters (2') bildet, wobei die Schmelzlotsicherung (5') bis zur Auslösetemperatur den Schieber (6) in vorgespannter Position hält, wobei die Auslösetemperatur der Schmelzlotsicherung (5') vorzugsweise aus der Gruppe gewählt ist, welche die Temperaturen 72°C, 98°C, 120°C und 147°C umfasst.

5. Vorrichtung nach einem der Ansprüche 1 bis 4, **dadurch gekennzeichnet, dass** der obere Behälter (2) an der Unterseite als Trichterkonstruktion (2") ausgebildet ist, wobei die Trichterkonstruktion (2") ein Fallrohr (8) umfasst, wobei die Auslöseeinrichtung (3) das Fallrohr (8) mit der Öffnung an der Oberseite des unteren Behälters (2') verbindet.

6. Vorrichtung nach einem der Ansprüche 1 bis 5, wobei der obere Behälter (2) an der Oberseite eine Füllöffnung (9) und einen Deckel (10) umfasst, wobei mit dem Deckel (10) die Füllöffnung (9) verschließbar ist.

7. Vorrichtung nach Anspruch 6, **dadurch gekennzeichnet, dass** der Deckel (10) einen Aktivkohlefilter und zumindest eine Austrittsöffnung (10') aufweist.

8. Vorrichtung nach einem der Ansprüche 1 bis 7, wobei der untere Behälter (1) doppelwandig ausgeführt ist.

9. Vorrichtung nach einem der Ansprüche 1 bis 8, **dadurch gekennzeichnet, dass** der untere Behälter (1) seitlich zumindest eine verschließbare Öffnung aufweist.

10. Vorrichtung nach Anspruch 9, **gekennzeichnet durch** eine verriegelbare Türe (11) am unteren Behälter (1), wobei mit der verriegelbaren Türe (11) die seitliche Öffnung verschließbar ist.

11. Vorrichtung nach einem der Ansprüche 1 bis 10, **dadurch gekennzeichnet, dass** an der Oberseite des unteren Behälters (1) zumindest ein Überdruckventil (12) angebracht ist.

12. Vorrichtung nach einem der Ansprüche 1 bis 11, **dadurch gekennzeichnet, dass** der untere Behälter (1) gegenüberliegende im Wesentlichen parallele Seitenwände aufweist, wobei im Inneren des Behälters an diesen Seitenwänden zumindest ein Paar von im Wesentlichen horizontal ausgerichteten Führungen (13) an jeweils einer Seitenwand auf gleicher Höhe angebracht ist, wobei an den Führungen (13) ein Gitterrost (14) fixierbar ist.

13. Vorrichtung nach einem der Ansprüche 1 bis 12, **gekennzeichnet durch** einen Wassersprinkler im unteren Behälter (1), wobei der Wassersprinkler ab einer Auslösetemperatur mittels einer Glassicherung ausgelöst wird, wobei die Auslösetemperatur der Glassicherung vorzugsweise aus der Gruppe gewählt wird, welche die Temperaturen 57°C, 68°C, 79°C, 73°C, 141°C und 182°C umfasst.

14. Vorrichtung nach einem der Ansprüche 1 bis 13, wobei der obere und der untere Behälter (2, 1) an der Unterseite Füße (15) und an der Oberseite Stapelecken (16) mit vorzugsweise einem Durchbruch aufweisen.

## Claims

1. A device for the safe storage of flammable materials, in particular lithium-ion accumulators, comprising
• a lower container (1), which is refractory and has an opening at the top side (1'),
• an upper container (2), which preferably comprises solid, free-flowing extinguishing agent, and has an opening at the bottom side (2'),
• and a release device (3) with a fuse,
wherein the upper container (2) is detachably attachable above the lower container (1),
**characterized in that**
the release device (3) provides a releasable connection between the upper container (2) and the lower container (1) in the area of the respective opening (1', 2'),
wherein the releasable connection closes the opening at the top side of the lower container (1') and the opening at the bottom side of the upper container (2') and
wherein the fuse (3), after being triggered by a trigger temperature, opens the opening at the bottom side of the upper container (2') and the opening at the top side of the lower container (1') and establishes a material-conducting connection.

2. The device according to claim 1,
**characterized in that**
the fuse of the release device (3) melts at a trigger temperature of 70 to 150 °C, preferably of 95 and 125 °C.

3. The device according to one of claims 1 or 2,
**characterized in that**
the release device comprises a diaphragm (4), the diaphragm (4) covering the opening between the upper and lower containers (2, 1), wherein the diaphragm preferably melts from a trigger temperature of 100 to 120 °C.

4. The device according to any one of claims 1 to 3,
**characterized in that**
the release device comprises a slider construction (5) with fusible link (5'), the slider construction (5) comprising a slider (6) with at least one pneumatic cylinder (7), the slider (6) forming a barrier between the opening at the top side of the lower container (1') and the opening at the bottom side of the upper container (2') in the preloaded position wherein the fusible link (5') maintains the slider (6) in the preloaded position up to the trigger temperature, wherein the trigger temperature of the fusible link (5') is preferably selected from the group comprising the temperatures 72°C, 98°C, 120°C and 147°C.

5. The device according to any one of claims 1 to 4,
**characterized in that**
the upper container (2) is designed at the bottom side as a funnel construction (2"), the funnel construction (2") comprising a downpipe (8), the release device (3) connecting the downpipe (8) to the opening at the top side of the lower container (2')).

6. The device according to any one of claims 1 to 5, wherein
the upper container (2) comprises a filling opening (9) and a cover (10) on the top side, wherein the filling opening (9) is closable with the cover (10).

7. The device according to claim 6,
**characterized in that**
the cover (10) has an activated carbon filter and at least one outlet opening (10').

8. The device according to any one of claims 1 to 7, wherein
the lower container (1) is double-walled.

9. The device according to any one of claims 1 to 8,
**characterized in that**
the lower container (1) has at least one closable opening at the side.

10. The device according to claim 9, **characterized by**
a lockable door (11) on the lower container (1), wherein the side opening is closable with the lockable door (11).

11. The device according to any one of claims 1 to 10,
**characterized in that**
at least one pressure relief valve (12) is arranged on the top side of the lower container (1).

12. The device according to any one of claims 1 to 11,
**characterized in that**
the lower container (1) has opposite substantially parallel side walls, wherein inside the container at least one pair of substantially horizontally aligned guides (13) is attached to these side walls at the same height each on one side wall, wherein a grating (14) can be fixed to the guides (13).

13. The device according to any one of claims 1 to 12, **characterized by**
a water sprinkler in the lower container (1), wherein the water sprinkler is triggered at a trigger temperature by means of a glass fuse, wherein the trigger temperature of the glass fuse is preferably selected from the group comprising the temperatures 57°C, 68°C, 79°C, 73°C, 141°C and 182°C.

14. The device according to any one of claims 1 to 13, wherein
the upper and lower containers (2, 1) have feet (15) on the bottom side and stacking corners (16) with preferably an aperture on the top side.

## Revendications

1. Dispositif de stockage sécurisé de matières inflammables, en particulier d'accumulateurs lithium-ion, comprenant :
un récipient inférieur (1) qui est résistant au feu et comprend une ouverture sur le côté supérieur (1'),
un récipient supérieur (2) qui comporte un agent d'extinction de préférence solide et apte à l'écoulement et qui comprend une ouverture sur le côté inférieur (2'), et
un dispositif de déclenchement (3) comprenant un organe de blocage fusible,
le récipient supérieur (2) étant apte à être monté de façon détachable au-dessus du récipient inférieur (1),
**caractérisé en ce que**
ledit dispositif de déclenchement (3) est destiné à établir une connexion détachable entre le récipient supérieur (2) et le récipient inférieur (1) au niveau de l'ouverture respective (1', 2'),
la connexion détachable étant destinée à fermer ladite ouverture sur le côté supérieur du récipient inférieur (1') et ladite ouverture sur le côté inférieur du récipient supérieur (2'), et
ledit un organe de blocage fusible (3) étant destiné, après le déclenchement par une température de déclenchement, à libérer ladite ouverture sur le côté inférieur du récipient supérieur (2') et ladite ouverture sur le côté supérieur du récipient inférieur (1') et à établir une connexion apte à laisser passer du matériel.

2. Dispositif selon la revendication 1, **caractérisé en ce que** ledit organe de blocage fusible du dispositif de déclenchement (3) est destiné à fondre à une température comprise entre 70 et 150 °C, de préférence entre 95 et 125 °C.

3. Dispositif selon l'une quelconque des revendications 1 ou 2, **caractérisé en ce que** ledit dispositif de déclenchement comprend une membrane (4), ladite membrane (4) couvrant l'ouverture entre les récipients supérieur et inférieur (2, 1), ladite membrane fondant de préférence à partir d'une température de déclenchement comprise entre 100 et 120 °C.

4. Dispositif selon l'une quelconque des revendications 1 à 3, **caractérisé en ce que** ledit dispositif de déclenchement comprend une construction à glissière (5) comprenant un organe de blocage à fusible (5'), ladite construction à glissière (5) comprenant une glissière (6) comportant au moins un vérin pneumatique (7), ladite glissière (6) formant dans une position sollicitée une barrière entre ladite ouverture sur le côté supérieur du récipient inférieur (1') et ladite ouverture sur le côté inférieure du récipient supérieur (2'), ledit organe de blocage à fusible (5') maintenant ladite glissière (6) dans la position sollicitée jusqu'à la température de déclenchement, la température de déclenchement dudit organe de blocage à fusible (5') étant de préférence sélectionnée dans le groupe comportant les températures de 72 °C, 98 °C, 120 °C et 147 °C.

5. Dispositif selon l'une quelconque des revendications 1 à 4, **caractérisé en ce que** le récipient supérieur (2) est réalisé, sur son côté inférieur, sous forme d'une construction à entonnoir (2"), ladite construction à entonnoir (2") comprenant un tuyau de descente (8), ledit dispositif de déclenchement (3) reliant le tuyau de descente (8) à l'ouverture sur le côté supérieur du récipient inférieur (2').

6. Dispositif selon l'une quelconque des revendications 1 à 5, **caractérisé en ce que** le récipient supérieur (2) comprend sur son côté supérieur une ouverture de remplissage (9) et un couvercle (10), ledit couvercle (10) étant apte à fermer ladite ouverture de remplissage (9).

7. Dispositif selon la revendication 6, **caractérisé en ce que** ledit couvercle (10) comprend un filtre à charbon actif et au moins une ouverture de sortie (10').

8. Dispositif selon l'une quelconque des revendications 1 à 7, **caractérisé en ce que** le récipient inférieur (1) est un récipient à double paroi.

9. Dispositif selon l'une quelconque des revendications 1 à 8, **caractérisé en ce que** le récipient inférieur (1) comprend sur son côté latéral au moins une ouverture apte à être fermée.

10. Dispositif selon la revendication 9, **caractérisé en ce qu'**il comprend sur le récipient inférieur (1) une porte verrouillable (11), ladite porte verrouillable (11) étant apte à fermer ladite ouverture latérale.

11. Dispositif selon l'une quelconque des revendications 1 à 10, caractérisé en ce au moins une soupape de sécurité (12) est disposée sur le côté supérieur du récipient inférieur (1).

12. Dispositif selon l'une quelconque des revendications 1 à 11, caractérisé en ce le récipient inférieur (1) comprend des parois opposées sensiblement parallèles, à l'intérieur du récipient sur ces côtés latérales étant disposés au moins une paire d'organes de guidage (13), qui sont orientés sensiblement en direction horizontale, chacun sur l'une des parois et au même niveau, une grille (14) étant apte à être fixée sur lesdits organes de guidage (13).

13. Dispositif selon l'une quelconque des revendications 1 à 12, **caractérisé en ce qu'**il comprend un sprinkler à eau dans le récipient inférieur (1), ledit sprinkler à eau étant apte à être déclenché à partir d'une température de déclenchement moyennant un fusible en verre, la température de déclenchement dudit fusible en verre étant de préférence sélectionnée dans le groupe comportant les températures de 57 °C, 68 °C, 79 °C, 73 °C, 141 °C et 182 °C.

14. Dispositif selon l'une quelconque des revendications 1 à 13, caractérisé en ce les récipients supérieur et inférieur (2, 1) comprennent des pieds (15) sur le côté inférieur et sur le côté supérieur des coins de gerbage (16) qui ont de préférence une percée.
